# EUROPEAN PATENT APPLICATION

(11) **EP 4 844 540 A1**
(43) Date of publication of application: **25.11.2026**
(21) Application number: 25851714.3
(22) Date of filing: 01.07.2025
(51) Int. Cl.: G06F 3/01, G06F 1/16, H04B 17/318

(54) **WEARABLE DEVICE AND CONTROL METHOD THEREFOR**

(30) Priority: 08.08.2024 KR 20240106060
(71) Applicant: Samsung Electronics Co., Ltd., Suwon-si, Gyeonggi-do 16677 (KR)
(72) Inventor: YI, Sungmin, Suwon-si, Gyeonggi-do 16677 (KR); KIM, Wooil, Suwon-si, Gyeonggi-do 16677 (KR); SONG, Seokwoo, Suwon-si, Gyeonggi-do 16677 (KR); YUN, Jihwan, Suwon-si, Gyeonggi-do 16677 (KR)
(74) Representative: Gulde & Partner
(86) International application number: PCT/KR2025/009365
(87) International publication number: WO 2026/034806

(57) **Abstract**

Provided are a wearable device and a method of controlling same. The wearable device includes: a communication interface; memory storing instructions; and a processor configured to: obtain strength information regarding a strength of a first signal transmitted by an external device; obtain strength information regarding a strength of a second signal transmitted by an external wearable device; receive, from the external wearable device, strength information regarding a strength of a third signal received by the external wearable device; obtain, based on the strength information for the first signal, the second signal, and the third signal, information on an angle formed between a line between the wearable device and the external device and a line between the external wearable device and the external device; and identify whether the external device is a device to be controlled based on whether the angle is less than or equal to a threshold value.

## Description

### [Technical Field]

The disclosure relates to a wearable device and a method of controlling the same, and more particularly, to a wearable device that can control an external device pointed at by a user wearing the wearable device, and a method of controlling the same.

### [Background Art]

Recently, as Internet of Things (IoT) technologies have developed, various devices are not directly manipulated, but devices can be manipulated through other interfaces (e.g., a voice, a mobile application, etc.).

In particular, there is an increasing demand for control of a device that improves the user's convenience and is through an intuitive manipulation, like a manipulation through a gesture. However, in cases where there are various devices around the user, there may be a case wherein it would be difficult to determine which device should be manipulated when manipulating at least one of a plurality of devices by using a gesture.

Accordingly, there is a need for research of a method for identifying an external device that exists in the closest direction to a direction pointed at by the user.

### [Disclosure]

### [Technical Solution]

According to an aspect of the disclosure, a wearable device includes: a communication interface; memory storing instructions; and at least one processor configured to individually or collectively execute the instructions, wherein the instructions, when individually or collectively executed by the at least one processor, cause the wearable device to: obtain strength information regarding a strength of a first signal transmitted by an external device, obtain strength information regarding a strength of a second signal transmitted by an external wearable device, receive, from the external wearable device through the communication interface, strength information regarding a strength of a third signal received by the external wearable device, obtain, based on the strength information for the first signal, the second signal, and the third signal, information on an angle formed between a line between the wearable device and the external device and a line between the external wearable device and the external device, and identify whether the external device is a device to be controlled based on whether the angle is less than or equal to a threshold value.

The instructions, when individually or collectively executed by the at least one processor, may further cause the wearable device to: obtain information on a hand gesture of a user wearing the wearable device based on a sensing value detected by a motion sensor, wherein the motion sensor is included in at least one of the wearable device or the external wearable device, and transmit, to the external device through the communication interface, a control command corresponding to the information on the hand gesture.

The instructions, when individually or collectively executed by the at least one processor, may further cause the wearable device to: obtain profile information of a user including information on a size of a user's hand, and correct the threshold value based on a correction value corresponding to the size of the user's hand.

The instructions, when individually or collectively executed by the at least one processor, may further cause the wearable device to: based on initially setting a mode controlling the external device using the wearable device, obtain a correction value corresponding to the external device, and based on identifying the external device, correct the threshold value based on the obtained correction value.

The instructions, when individually or collectively executed by the at least one processor, may further cause the wearable device to: identify whether an external communication interface of at least one device, among a plurality of devices existing in a home, was activated using an external server, and based on identifying that the external communication interface of at least one device, of the plurality of devices existing in the home, was not activated, transmit a request signal, to the external server through the communication interface, to activate the external communication interface of the at least one device of the plurality of devices existing in the home.

The instructions, when executed individually or collectively by the at least one processor, may further cause the wearable device to: based on information on ambient devices included in a signal received through the communication interface, obtain information on an area where a user wearing the wearable device is located, and transmit, to the external server through the communication interface, a request signal to activate the external communication interface of at least one of the at least one device, of the plurality of devices existing in the home, that is located in the area.

The instructions, when individually or collectively executed by the at least one processor, may further cause the wearable device to: receive, from the external wearable device through the communication interface, a sensing value detected by a motion sensor of the external wearable device, and detect a pointing gesture of a user based on the received sensing value.

The instructions, when individually or collectively executed by the at least one processor, may further cause the wearable device to: obtain strength information regarding a strength of respective first signals transmitted by each external device of a plurality of external devices, wherein the plurality of external devices includes the external device, obtain, based on the strength information for the respective first signals, the second signal, and the third signal, information on respective angles formed between a line between the wearable device and each of the plurality of external devices and the line between the external wearable device and the external device, and based on identifying that on the respective angles are all less than or equal to the threshold value, identify an external device, among the plurality of external devices, associated with a largest signal strength as the device to be controlled.

The instructions, when individually or collectively executed by the at least one processor, may further cause the wearable device to: provide guide information including information on the external device and information on a mode for controlling the external device.

The wearable device may include a device worn on a wrist of a user, and the external wearable device may include a device worn on a finger of the user.

According to an aspect of the disclosure, a method of controlling a wearable device includes: obtaining strength information regarding a strength of a first signal transmitted by an external device; obtaining strength information regarding a strength of a second signal transmitted by an external wearable device; receiving, from the external wearable device through a communication interface of the wearable device, strength information for the strength of a third signal received by the external wearable device; obtaining, based on the strength information for the first signal, the second signal, and the third signal, information on an angle formed between a line between the wearable device and the external device and a line between the external wearable device and the external device; and identifying whether the external device is a device to be controlled based on whether the angle is less than or equal to a threshold value.

The method may further include: obtaining information on a hand gesture of a user wearing the wearable device based on a sensing value detected by a motion sensor, wherein the motion sensor is included in at least one of the wearable device or the external wearable device; and transmitting, to the external device through the communication interface, a control command corresponding to the information on the hand gesture.

The method may further include: obtaining profile information of a user including information on a size of a user's hand; and correcting the threshold value based on a correction value corresponding to the size of the user's hand.

The method may further include: based on initially setting a mode controlling the external device using the wearable device, obtaining a correction value corresponding to the external device; and based on identifying the external device, correcting the threshold value based on the obtained correction value.

The method may further include: identifying whether an external communication interface of at least one device, among a plurality of devices existing in a home, was activated using an external server, and based on identifying that the external communication interface of at least one device, of the plurality of devices existing in the home, was not activated, transmitting a request signal, to the external server through the communication interface, to activate the external communication interface of the at least one device of the plurality of devices existing in the home.

According to an aspect of the disclosure, a non-transitory computer readable medium has instructions stored therein, which when executed by at least one processor cause the at least one processor to execute a method of controlling a wearable device, the method including: obtaining strength information regarding a strength of a first signal transmitted by an external device; obtaining strength information regarding a strength of a second signal transmitted by an external wearable device; receiving, from the external wearable device through a communication interface of the wearable device, strength information for the strength of a third signal received by the external wearable device; obtaining, based on the strength information for the first signal, the second signal, and the third signal, information on an angle formed between a line between the wearable device and the external device and a line between the external wearable device and the external device; and identifying whether the external device is a device to be controlled based on whether the angle is less than or equal to a threshold value.

With regard to the non-transitory computer readable medium, the method may further include: obtaining information on a hand gesture of a user wearing the wearable device based on a sensing value detected by a motion sensor, wherein the motion sensor is included in at least one of the wearable device or the external wearable device; and transmitting, to the external device through the communication interface, a control command corresponding to the information on the hand gesture.

With regard to the non-transitory computer readable medium, the method may further include: obtaining profile information of a user including information on a size of a user's hand; and correcting the threshold value based on a correction value corresponding to the size of the user's hand.

With regard to the non-transitory computer readable medium, the method may further include: based on initially setting a mode controlling the external device using the wearable device, obtaining a correction value corresponding to the external device; and based on identifying the external device, correcting the threshold value based on the obtained correction value.

With regard to the non-transitory computer readable medium, the method may further include: identifying whether an external communication interface of at least one device, among a plurality of devices existing in a home, was activated using an external server, and based on identifying that the external communication interface of at least one device, of the plurality of devices existing in the home, was not activated, transmitting a request signal, to the external server through the communication interface, to activate the external communication interface of the at least one device of the plurality of devices existing in the home.

### [Description of Drawings]

The above and other aspects and features of certain embodiments of the present disclosure will be more apparent from the following description taken in conjunction with the accompanying drawings, in which:
FIG. 1 is a diagram illustrating a system that identifies an external device pointed at by a wearable device according to one or more embodiments of the disclosure;
FIG. 2 is a block diagram illustrating a configuration of a wearable device according to one or more embodiments of the disclosure;
FIG. 3 is a diagram illustrating a software module included in a system according to one or more embodiments of the disclosure;
FIG. 4 is a flow chart for illustrating a method for a wearable device to control an external device pointed at by a user according to one or more embodiments of the disclosure;
FIG. 5 is a sequence diagram for illustrating a method for a wearable device to detect a pointing gesture according to one or more embodiments of the disclosure;
FIG. 6 is a diagram for illustrating a method of identifying an external device pointed at by a wearable device according to one or more embodiments of the disclosure;
FIG. 7 and FIG. 8 are diagrams for illustrating a method of correcting a threshold value according to profile information of a user according to one or more embodiments of the disclosure;
FIG. 9 is a flow chart for illustrating a method of identifying an external device pointed at by a user among a plurality of external devices according to one or more embodiments of the disclosure;
FIG. 10 is a diagram for illustrating a method of identifying an external device pointed at by a user among a plurality of external devices according to one or more embodiments of the disclosure;
FIG. 11 is a diagram including guide information for guiding a device to be controlled according to one or more embodiments of the disclosure;
FIG. 12 is a flow chart for illustrating embodiment method of changing a device to be controlled according to a change of a pointing direction of a user according to one or more embodiments of the disclosure;
FIGS. 13, 14A, 14B, and 15 are diagrams for illustrating a method of activating a communication interface of an external device according to one or more embodiments of the disclosure; and
FIG. 16 is a diagram for illustrating initial setting for a mode controlling an external device by using a wearable device according to one or more embodiments of the disclosure.

### [Mode for Invention]

Various modifications may be made to the embodiments of the disclosure, and there may be various types of embodiments. Accordingly, specific embodiments will be illustrated in drawings, and the embodiments will be described in detail in the detailed description. However, it should be noted that the embodiments described herein are not intended to limit the scope of the disclosure to a specific embodiment, but the disclosure should be interpreted to include various modifications, equivalents, and/or alternatives of the embodiments of the disclosure. Also, with respect to the detailed description of the drawings, similar components may be designated by similar reference numerals.

Further, in describing the disclosure, in case it is determined that detailed explanation of related known functions or features may unnecessarily confuse the gist of the disclosure, the detailed explanation will be omitted.

In addition, the embodiments below may be modified in various different forms, and the scope of the technical idea of the disclosure is not limited to the embodiments below. Rather, these embodiments are provided to make the disclosure more sufficient and complete, and to fully convey the technical idea of the disclosure to those skilled in the art.

Also, the terms used in the disclosure are used only to explain specific embodiments, and are not intended to limit the scope of the disclosure. Further, singular expressions include plural expressions, unless defined obviously differently in the context.

In addition, in the disclosure, expressions such as "have," "may have," "include," and "may include" denote the existence of such characteristics (e.g., elements such as numbers, functions, operations, and components), and do not exclude the existence of additional characteristics.

Further, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including at least one A, (2) including at least one B, or (3) including at least one A and at least one B.

Also, the expressions "first," "second," and the like used in the disclosure may describe various elements regardless of any order and/or degree of importance. In addition, such expressions are used only to distinguish one element from another element, and are not intended to limit the elements.

The description in the disclosure that one element (e.g., a first element) is "(operatively or communicatively) coupled with/to" or "connected to" another element (e.g., a second element) should be interpreted to include both the case where the one element is directly coupled to the another element, and the case where the one element is coupled to the another element through still another element (e.g., a third element).

In contrast, the description that one element (e.g., a first element) is "directly coupled" or "directly connected" to another element (e.g., a second element) can be interpreted to mean that still another element (e.g., a third element) does not exist between the one element and the another element.

Also, the expression "configured to" used in the disclosure may be interchangeably used with other expressions such as "suitable for," "having the capacity to," "designed to," "adapted to," "made to," and "capable of," depending on cases. The term "configured to" may not necessarily mean that a device is "specifically designed to" in terms of hardware.

Instead, under some circumstances, the expression "a device configured to" may mean that the device "is capable of" performing an operation together with another device or component. For example, the phrase "a processor configured to perform A, B, and C" may mean a dedicated processor (e.g., an embedded processor) for performing the corresponding operations, or a generic-purpose processor (e.g., a CPU or an application processor) that can perform the corresponding operations by executing one or more software programs stored in a memory device.

In addition, in the embodiments of the disclosure, "a module" or "a part" may perform at least one function or operation, and may be implemented as hardware or software, or as a combination of hardware and software. Also, a plurality of "modules" or "parts" may be integrated into at least one module and implemented as at least one processor, excluding "a module" or "a part" that needs to be implemented as specific hardware.

With regard to any method or process described herein, an identification code may be used for the convenience of the description but is not intended to illustrate the order of each step or operation. Each step or operation may be implemented in an order different from the illustrated order unless the context clearly indicates otherwise. One or more steps or operations may be omitted unless the context of the disclosure clearly indicates otherwise.

The various actions, acts, blocks, steps, or the like in the flow diagrams may be performed in the order presented, in a different order, or simultaneously. Further, in one or more embodiments, some of the actions, acts, blocks, steps, or the like may be omitted, added, modified, skipped, or the like without departing from the scope of the disclosure.

Various elements and areas in the drawings were illustrated schematically. Accordingly, the technical idea of the disclosure is not limited by the relative sizes or intervals illustrated in the accompanying drawings.

Hereinafter, the disclosure will be described in more detail with reference to the accompanying drawings.

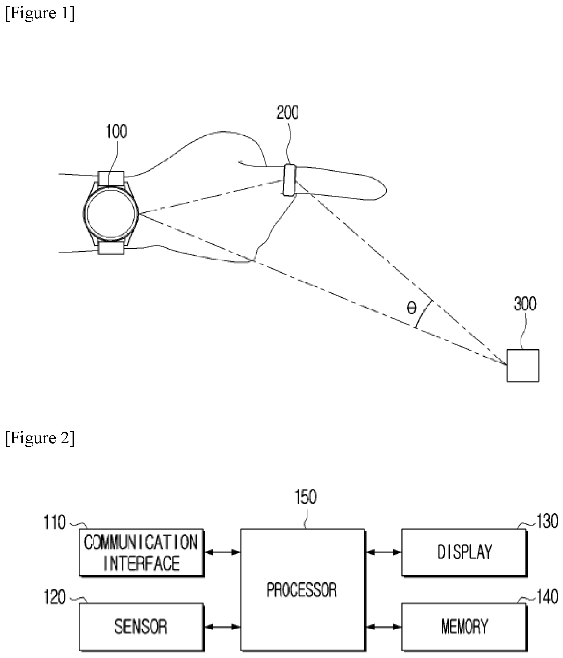

FIG. 1 is a diagram illustrating a system that identifies an external device pointed at by a wearable device according to one or more embodiments of the disclosure. As illustrated in FIG. 1, a system may include a wearable device 100, an external wearable device 200, and an external device 300. Here, the wearable device 100 and the external wearable device 200 are devices worn in different locations, and may be worn while distanced by a specific distance. According to one or more embodiments, the wearable device 100 is a wearable device worn on a wrist of a user, and may be a smart watch, but this is merely an example, and it may be implemented as another wearable device (e.g., a smart bracelet, etc.). The external wearable device 200 is a wearable device that a user wearing the wearable device 100 wears on a finger, and may be implemented as a smart ring. Also, the external device 300 may be implemented as a home appliance in a home, and may be implemented as, for example, various devices such as a television (TV), an air conditioner, a refrigerator, etc.

The wearable device 100 and the external wearable device 200 may be connected such that they can communicate with each other. According to one or more embodiments, the wearable device 100 and the external wearable device 200 may be communicatively connected through a Bluetooth interface.

If a user wearing the wearable device 100 and the external wearable device 200 points the external device 300, the wearable device 100 may detect the pointing gesture based on a sensing value obtained by at least one of the wearable device 100 or the external wearable device 200.

When a pointing gesture is detected, the wearable device 100 may obtain strength information for the strength of a first signal transmitted by the external device 300, and obtain strength information for the strength of a second signal transmitted by the external wearable device 200, and receive strength information for the strength of a third signal received by the external wearable device 200 from the external device 300.

Here, strength information of a signal is inversely proportional to a distance, and thus the wearable device 100 may obtain information on an angle θ formed by a line between the wearable device 100 and the external device 300 and a line between the external wearable device 200 and the external device 300 based on the strength information for the first to third signals. Here, the line between the wearable device 100 and the external device 300 and the line between the external wearable device 200 and the external device 300 may be virtual lines but not lines actually existing between the two devices.

Then, the wearable device 100 may identify whether the external device 300 is a device to be controlled based on whether the angle θ is within a threshold value. Here, the device to be controlled may be a device that a user wants to point and control. Specifically, if the angle θ is identified to be within (e.g., is less than or equal to) the threshold value, the wearable device 100 may identify the external device 300 as a device to be controlled. If the threshold value is defined as a range with an upper limit and a lower limit, the wearable device 100 may identify the external device 300 as a device to be controlled when the angle θ falls between the lower limit and the upper limit. If the threshold value corresponds only to an upper limit, the wearable device 100 may identify the external device 300 as a device to be controlled when the angle θ is less than or equal to the upper limit.

When a device to be controlled is identified, the wearable device 100 may convert to a control mode for controlling the external device 300. Here, the control mode may be a mode for controlling a device to be controlled according to a user gesture (or a hand gesture) detected through the wearable device 100 or the external wearable device 200.

If a user gesture is detected through the wearable device 100 or the external wearable device 200 during the control mode, the wearable device 100 may identify a control command for controlling a function of the external device 300 corresponding to the detected user gesture, and transmit the command to the external device 300.

FIG. 2 is a block diagram illustrating a configuration of a wearable device according to one or more embodiments of the disclosure. As illustrated in FIG. 2, the wearable device 100 may include a communication interface 110, a sensor 120, a display 130, memory 140, and a processor 150. The components of the wearable device 100 as illustrated in FIG. 1 are merely an example, and some components can be deleted or some components can be added depending on implementation examples of the wearable device 100.

The communication interface 110 is a component that performs communication with external devices in various types according to communication methods in various types. The communication interface 110 may include at least one wireless communication module. Here, each communication module may be implemented in the form of at least one hardware chip. A wireless communication module may be a module that communicates with an external device wirelessly. For example, a wireless communication module may include at least one module among a Wi-Fi interface, a Bluetooth interface, an infrared communication interface, or other communication interfaces. Other communication interfaces may include at least one communication chip that performs communication according to various wireless communication protocols such as Zigbee, 3rd Generation (3G), 3rd Generation Partnership Project (3GPP), Long Term Evolution (LTE), LTE Advanced (LTE-A), 4th Generation (4G), 5th Generation (5G), etc. other than the aforementioned communication methods.

In particular, the Bluetooth interface may perform communication by a Bluetooth method. In the case of using the Bluetooth interface, devices may perform authentication and exchange encrypted link keys through a paring process and then set communicative connection, and transmit and receive various types of information through this.

In particular, the communication interface 110 may receive a signal through the Bluetooth interface. In particular, the communication interface 110 may receive a first signal from the external device 300, and receive a second signal from the external wearable device 200. Here, the processor 150 may obtain strength information of the first and second signals received through the communication interface 110.

Also, the communication interface 110 may receive strength information of a third signal received by the external wearable device 200 from the external device 300 from the external wearable device 200.

The sensor 120 may obtain data for the ambient environment of the wearable device 100 or the user using the wearable device 100. The sensor 120 may include an illumination sensor, an inertial sensor, a magnetic sensor, a barometric sensor, a biometric sensor, a temperature sensor, and an electrode sensor.

The illumination sensor may obtain a sensing value regarding the brightness of an external light for controlling the luminance of the display 130. The inertial sensor may detect inertia such as an acceleration sensor and a gyroscope. On the inertial sensor, only an acceleration sensor (three axes) may be mounted, or a six-axis sensor including an acceleration sensor and a gyroscope may be mounted. The inertial sensor may obtain sensing values regarding a motion, a gesture, shock, a posture, and an action (sedentary, moving, sports) of the wearable device 100. The magnetic sensor may detect external magnetism, and detect the Earth's magnetic field, and obtain a sensing value for measuring orientation. The barometric sensor may detect the pressure of air, and an altitude may be assumed by using the barometric sensor. The biometric sensor is a sensor that irradiates a light on a living body, and receives a light that is absorbed, scattered, or reflected. An emitter of the biometric sensor emits lights of various bands, and may consist of elements such as LED, laser, and vertical cavity surface emitting laser (VCSEL). The band of the emitter may consist of various wavelengths such as green, red, infrared (IR), blue, yellow, and ultraviolet (UV). A receiver of the biometric sensor may receive a light which is a light that was irradiated from the emitter and was reflected and permeated, and store a value converted through an analog to digital converter (ADC) in the memory 140 or a sensor buffer. The receiver of the biometric sensor may include photodiodes (PD), a complementary metal-oxide-semiconductor (CMOS), and a camera. There is a filter in the receiver of the biometric sensor, and thus it may receive a light of a specific band, or filter a light outside the specific band. A controller of the biometric sensor may be an IC or an analog front-end (AFE), and control the emitter and the receiver, and process the received data, and transmit the data to the at least one processor 150 or store it in the memory 140. Also, the biometric sensor may emit a sound wave on a living body instead of a light, and detect a subject. Alternatively, the biometric sensor may operate in various combinations such as emitting a light and receiving a light that is absorbed, scattered, or reflected, or emitting a sound wave and receiving a reflected sound wave, or sensing an image. The biometric sensor may include a photoplethysmogram (PPG) sensor that detects a pulse by a light, and may measure a heart rate (HR), a heart rate variability (HRV), blood oxygen (SpO2), and a blood pressure. Also, the biometric sensor may include a biomarker sensor that detects a specific substance or component in vivo. The biomarker is an index through which a change in vivo can be identified such as cells in vivo, blood vessels, protein, deoxyribo nucleic acid (DNA), ribo nucleic acid (RNA), and metabolites, and may detect blood sugar, alcohol, advanced glycation end-product (AGE), and antioxidants. The temperature sensor is a sensor that measures the temperature of a living body or a component. Depending on methods, there are a contact type and a noncontact type for a temperature sensor. A temperature value measured by the temperature sensor may be stored in the memory 140, or transmitted to the processor 150 and used for assumption of a skin temperature sensor, or utilized in recognizing a situation or assuming a body temperature.

The electrode sensor may include electrodes which detect characteristics of a living body through a contact with the living body. An electrode is an interface for measuring electric characteristics (a voltage, a current, an impedance) with a living body as a medium, and may detect various physical characteristics by constituting an equivalent circuit with a body as a medium. In the case of a smart watch, it may measure a state of a living body by detecting electric signals generated in activities of a body with an electrocardiogram (ECG), electromyogram (EMG), and electroencephalogram (EEG). In the case of a smart watch, it may measure an electric signal generated from the heart by utilizing an INP electrode (a wrist) and an INM electrode (a finger of the opposite hand) for measuring ECG. Then, the smart watch may match the potential standard of a biometric signal with an RLD electrode as the ground, and can thereby further improve the accuracy of measurement of the biometric signal. Also, by using four electrodes of the smart watch, body components may be measured through body impedance analysis (BIA) measurement. The body components may include body fat and body water. In addition, by using two electrodes of the smart watch, electrodermal activity (EDA) of the skin may be measured. EDA may include all measurements related to electric skin response such as skin conductance, galvanic skin response (GSR), electrodermal response (EDR), and psychogalvanic reflex (PRG). Like this, the electrode sensor may measure various biometric indices based on a sensor circuit connected with a body with an electrode as an interface, and generate body-related data.

The display 130 may display a graphic user interface (GUI) of applications, functions, and services. A touch panel may be overlapped with or integrated to at least a part or the entire parts of the display 130, and it may include electrode sensing elements through a touch for sensing a body, sensing of pressure, and a transparent electrode. Also, the display 130 may include elements such as a liquid crystal display (LCD), an organic light emitting diodes (OLED) display, and micro LED.

The display 130 may provide guide information for guiding a device to be controlled.

In the memory 140, at least one instruction regarding the wearable device 100 may be stored. Also, in the memory 140, an operating system (O/S) for driving the wearable device 100 may be stored. In addition, in the memory 140, various types of software programs or applications for the wearable device 100 to operate according to the one or more embodiments of the disclosure may be stored. Specifically, in the memory 140, various types of software modules for the wearable device 100 to operate according to the one or more embodiments of the disclosure may be stored, and the at least one processor 150 may control the operations of the wearable device 100 by executing the various types of software modules stored in the memory 140. That is, the memory 140 may be accessed by the at least one processor 150, and reading/recording/correction/deletion/update, etc. of data by the at least one processor 150 may be performed.

According to one or more embodiments, the memory 140 may store various types of data or programs for identifying a subject to be controlled. For example, the memory 140 may store information on a user profile, and store a correction value corresponding to the external device 300.

The processor 150 may control the wearable device 100 according to the at least one instruction stored in the memory 140.

In particular, the processor 150 may include at least one processor. Specifically, the at least one processor may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor may control one or a random combination of the other components of the wearable device 100, and perform an operation related to communication or data processing. Also, the at least one processor may individually or collectively execute one or more programs or instructions stored in the memory. For example, the at least one processor may perform the method according to one or more embodiments of the disclosure by executing the one or more instructions stored in the memory. For example, the processor 150 may correspond to a plurality of processors that divide a plurality of operations among the processors, and collectively perform the operations.

In case the method according to one or more embodiments of the disclosure includes a plurality of operations, the plurality of operations may be performed by one processor, or performed by a plurality of processors. That is, when a first operation, a second operation, and a third operation are performed by the method according to one or more embodiments, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor). For example, according to one or more embodiments of the disclosure, an operation of identifying a device to be controlled by using a neural network model may be performed by a processor performing parallel operations such as a GPU or an NPU, and an operation of calculating an angle may be performed by a generic-purpose processor such as a CPU.

The at least one processor may be implemented as a single core processor including one core, or may be implemented as one or more multicore processors including a plurality of cores (e.g., multicores of the same kind or multicores of different kinds). In case the at least one processor is implemented as multicore processors, each of the plurality of cores included in the multicore processors may include internal memory of the processor such as cache memory, on-chip memory, etc., and common cache shared by the plurality of cores may be included in the multicore processors. Also, each of the plurality of cores (or some of the plurality of cores) included in the multicore processors may independently read a program instruction for implementing the method according to one or more embodiments of the disclosure and perform the instruction, or the plurality of entire cores (or some of the cores) may be linked with one another, and read a program instruction for implementing the method according to one or more embodiments of the disclosure and perform the instruction.

In case the method according to one or more embodiments of the disclosure includes a plurality of operations, the plurality of operations may be performed by one core among the plurality of cores included in the multicore processors, or they may be performed by the plurality of cores. For example, when the first operation, the second operation, and the third operation are performed by the method according to one or more embodiments, all of the first operation, the second operation, and the third operation may be performed by a first core included in the multicore processors, or the first operation and the second operation may be performed by the first core included in the multicore processors, and the third operation may be performed by a second core included in the multicore processors.

In the embodiments of the disclosure, the processor 150 may mean a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but the embodiments of the disclosure are not limited thereto.

In particular, the processor 150 obtains strength information for the strength of a first signal transmitted by the external device 300. Also, the processor 150 obtains strength information for the strength of a second signal transmitted by the external wearable device 200. Further, the processor 150 receives strength information for the strength of a third signal received by the external wearable device 200 from the external device 300 through the communication interface 110. The processor 150 obtains information on an angle formed between a line between the wearable device 100 and the external device 300 and a line between the external wearable device 200 and the external device 300 based on the strength information for the first to third signals. The processor 150 may identify whether the external device 300 is a device to be controlled based on whether the angle is within a threshold value.

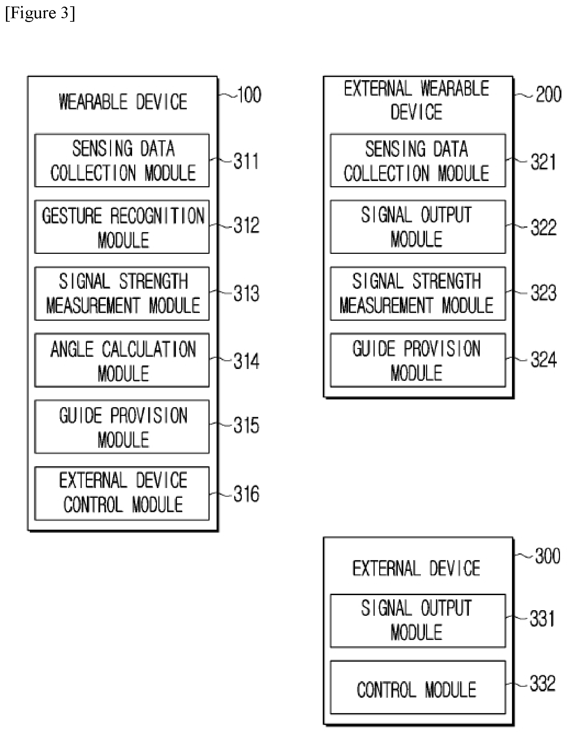

FIG. 3 is a diagram illustrating a software module included in a system according to one or more embodiments of the disclosure. As illustrated in FIG. 3, the wearable device 100 may include a sensing data collection module 311, a gesture recognition module 312, a signal strength measurement module 313, an angle calculation module 314, a guide provision module 315, and an external device control module 316. The external wearable device 200 may include a sensing data collection module 321, a signal output module 322, a signal strength measurement module 323, and a guide provision module 324. The external device 300 may include a signal output module 331 and a control module 332. The modules illustrated in FIG. 3 may be implemented as software, but this is merely an example, and the modules may be implemented as a combination of software and hardware.

The sensing data collection module 311 may obtain sensing data related to a gesture (in particular, a hand gesture) of the user by using the sensor 120. In particular, the wearable device 100 may identify a pointing gesture or a predefined hand gesture, etc. based on sensing data obtained through the sensing data collection module 311. Here, as the sensing data, acceleration (x, y, z axes) and gyroscope (x, y, z axes of angular velocity) data may be obtained at an IMU sensor consisting of an acceleration sensor and a gyro sensor. Here, the sensing data may be referred to as various terms such as a sensing value, sensing information, etc.

The gesture recognition module 312 may recognize a gesture of the user based on the sensing data obtained through the sensing data collection module 311. Specifically, the gesture recognition module 312 may perform pre-processing (e.g., filtering, normalization, etc.) for the sensing data obtained through the sensing data collection module 311, and extract characteristic information based on the pre-processed sensing data. Here, the extracted characteristic information may be at least one of basic characteristic information (e.g., basic statistical characteristics such as an average, a standard deviation, etc.), characteristic information of a time domain, or characteristic information of a frequency domain. Also, the gesture recognition module 312 may recognize a gesture by inputting the extracted characteristic information into a trained model. According to one or more embodiments, the gesture recognition module 312 may recognize a gesture of the user based on the sensing data received from the external wearable device 200.

The signal strength measurement module 313 may measure the strength of a signal received from one of the external wearable device 200 or the external device 300. Here, the strength of a signal is Received Signal Strength Indicator (RSSI) information, and may be used usefully when measuring a distance between the wearable device 100 and other devices. Specifically, the signal strength measurement module 313 may measure the strength information of the first signal received from the external device 300, and measure the strength information of the second signal received from the external wearable device 200.

The angle calculation module 314 may obtain information on an angle formed between a line between the wearable device 100 and the external device 300 and a line between the external wearable device 200 and the external device 300 based on the strength information for the first to third signals. Here, the line between the wearable device 100 and the external device 300 and the line between the external wearable device 200 and the external device 300 may be virtual lines but not lines that actually exist between the two devices.

Specifically, the angle calculation module 314 may assume a ratio of line segments of a triangle constituted by the wearable device 100, the external wearable device 200, and the external device 300 based on the strength information for the first to third signals. Also, the angle calculation module 314 may obtain information on the angle formed between the line between the wearable device 100 and the external device 300 and the line between the external wearable device 200 and the external device 300 based on the assumed ratio of the line segments of the triangle. More detailed explanation in this regard will be described with reference to the drawings later.

Also, the angle calculation module 314 may identify the size of the user's hand based on a user profile, and correct the strength information of a signal according to the identified size of the hand.

The guide provision module 315 may provide various types of guide information. According to one or more embodiments, the guide provision module 315 may provide guide information including information on an identified device to be controlled. Alternatively, the guide provision module 315 may provide guide information guiding that a control mode for a device to be controlled was entered. Alternatively, the guide provision module 315 may provide guide information including information on a recognized gesture.

The guide provision module 315 may provide guide information through the display 130, but this is merely an example, and the guide provision module 315 may provide an auditory message through a speaker, and provide a tactile message through a haptic module.

The external device control module 316 may identify control information corresponding to a gesture recognized by the gesture recognition module 312. Specifically, the memory 140 may store mapping information that maps a hand gesture and control information according to the type of the external device 300. The external device control module 316 may identify control information corresponding to a recognized hand gesture based on mapping information corresponding to an identified external device.

The sensing data collection module 321, the signal strength measurement module 323, and the guide provision module 324 included in the external wearable device 200 perform the same functions as the sensing data collection module 311, the signal strength measurement module 313, and the guide provision module 315 included in the wearable device 100, and thus overlapping explanation will be omitted.

The signal output module 322 may output a signal through the Bluetooth interface. According to one or more embodiments, the signal output module 322 may transmit an advertising signal including identification and descriptive information about the external wearable device 200. Here, the advertising signal may include an advertising packet and information on the external wearable device 200. The advertising packet may contain fields such as the device name, Media Access Control (MAC) address, Universally Unique Identifiers (UUIDs) for available services, and other relevant metadata pertaining to the external wearable device 200. The wearable device 100 may receive the signal output by the signal output module 322, and obtain strength information of the signal, such as the Received Signal Strength Indicator (RSSI), to estimate the proximity or distance of the external wearable device 200..

As the signal output module 331 included in the external device 300 performs the same function as the signal output module 322 included in the external wearable device 200, overlapping explanation will be omitted.

The control module 332 may control various functions of the external device 300. According to one or more embodiments, the control module 332 may control functions of the external device 300 according to control information generated by the external device control module 316 of the wearable device 100. According to another embodiment, the control module 332 may control various functions of the external device 300 according to a user command input through another device for controlling the external device 300 or the interface included in the external device 300.

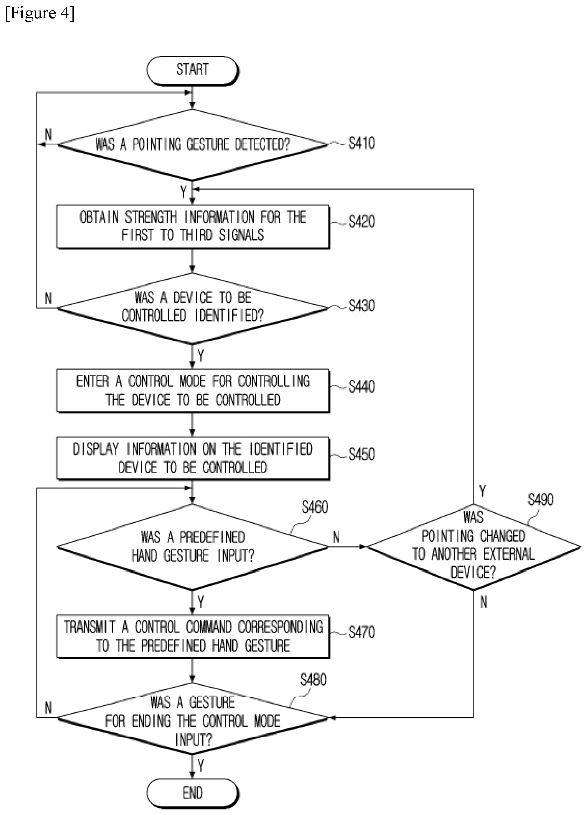

FIG. 4 is a flow chart for illustrating a method for a wearable device to control an external device pointed at by a user according to one or more embodiments of the disclosure.

First, the wearable device 100 identifies whether a pointing gesture was detected in the operation S410. Here, the pointing gesture is a gesture by which the user wearing the wearable device 100 points one of the devices in the home, and according to one or more embodiments, it may be a gesture of unfolding the finger wearing the external wearable device 200, and directing the unfolded finger toward an external device.

According to one or more embodiments, the wearable device 100 may detect a pointing gesture by using a sensing value through a sensor included in the wearable device 100. Here, the sensor for detecting a pointing gesture may include various sensors such as a motion sensor (e.g., an acceleration sensor, a gyro sensor, etc.), a plethysmograph (PPG) sensor, etc.

According to one or more embodiments, the wearable device 100 may receive a sensing value obtained through a sensor included in the external wearable device 200. Here, the external wearable device 200 may be configured to be worn on a finger of the user's hand that also wears the wearable device 100. The external wearable device 200 may be a smart ring. The wearable device 100 may detect a pointing gesture by receiving a sensing value from the external wearable device 200. Here, the external wearable device 200 may obtain timestamp information which is information on the time point of detecting the sensing value together with the sensing value. The external wearable device 200 may detect a pointing gesture through a sensing value included in a window in a predetermined size by using the timestamp information.

The wearable device 100 may obtain strength information for the first to third signals in the operation S420. Here, the first signal may be transmitted (or broadcasted) by the external device 300 and received by the wearable device 100, and the second signal may be transmitted by the external wearable device 200 and received by the wearable device 100, and the third signal may be transmitted (or broadcasted) by the external device 300 and received by the external wearable device 200. The strength information for the first signal and the second signal may be obtained by the wearable device 100, and the strength information for the third signal may be obtained by the external wearable device 200 and transmitted to the wearable device 100.

Strength information for a signal is a value indicating the strength at which a signal generated from the communication interface (e.g., the Bluetooth interface) is transmitted. The strength information generally indicates the power of a signal or the quality of a signal, and may be measured in units such as a decibel milliwatt (dBm) or a Received Signal Strength Indicator (RSSI).

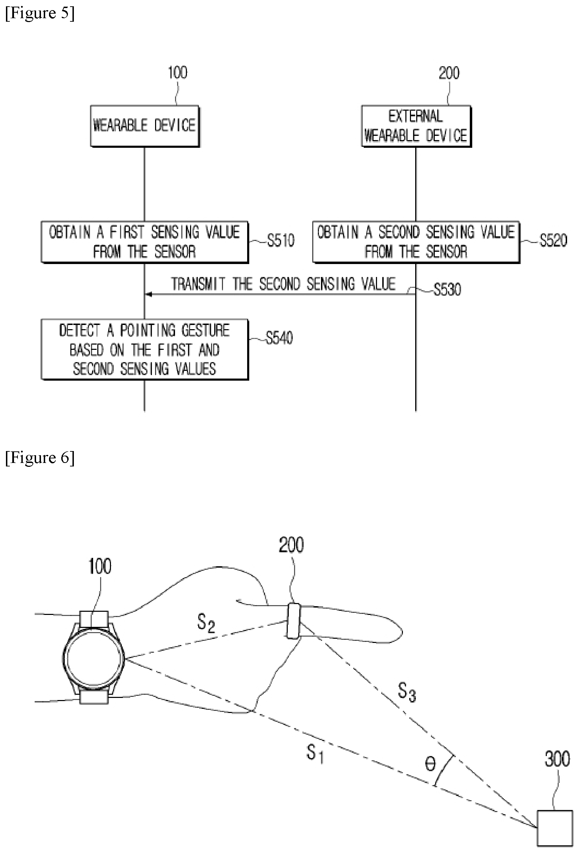

In particular, the strength of a signal received through the Bluetooth interface may become stronger as the distance is closer, and may become weaker as the distance is farther. That is, signal strength may be inversely proportional to the distance. Accordingly, the wearable device 100 may obtain a ratio of the lengths of the triangle consisting of the wearable device 100, the external wearable device 200, and the external device 300 based on the strength information for the first to third signals. The wearable device 100 may obtain information on the angle formed between the line between the wearable device 100 and the external device 300 and the line between the external wearable device 200 and the external device 300 based on the ratio of the lengths of the triangle consisting of the wearable device 100, the external wearable device 200, and the external device 300. More detailed explanation in this regard will be described with reference to FIG. 6 later.

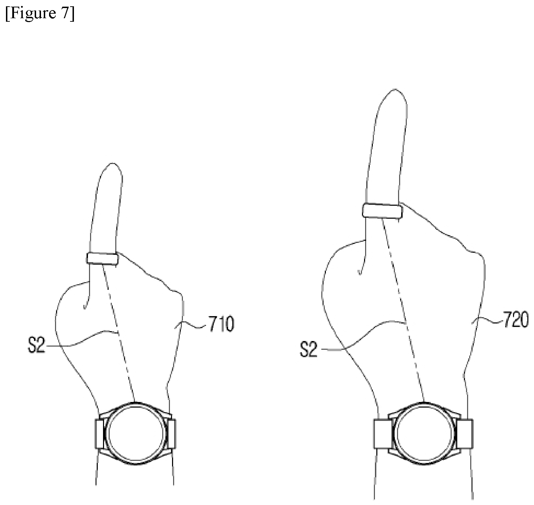

According to one or more embodiments, the wearable device 100 may correct the strength information for the first to third signals based on the user's profile information. Specifically, as the size of a hand varies for each user, the wearable device 100 may assume the size of the user's hand based on the age information included in the user's profile information, and correct the strength of the first to third signals based on the assumed hand size. More detailed explanation in this regard will be described with reference to FIG. 7 later.

The wearable device 100 may identify a device to be controlled in the operation S430. Here, the device to be controlled is an external device pointed at by the user, and it may be a device that the user wants to control. The device to be controlled may be replaced by terms such as a target device, a pointing device, a reception device, etc.

Specifically, the wearable device 100 may identify whether the external device 300 is a device to be controlled based on whether the angle formed between the line between the wearable device 100 and the external device 300 and the line between the external wearable device 200 and the external device 300 is smaller than or equal to a threshold value. Here, the threshold value is the maximum angle that can be formed between the line between the wearable device 100 and the external device 300 and the line between the external wearable device 200 and the external device 300 when the wearable device 100 worn by the user, the external wearable device 200, and the external device 300 are located on a straight line, and it may be, for example, one degree. Here, the threshold value may vary according to the type of the external device 300.

In case the angle formed between the line between the wearable device 100 and the external device 300 and the line between the external wearable device 200 and the external device 300 is smaller than or equal to the threshold angle, the wearable device 100 may identify that the user is pointing the external device 300, and identify the external device 300 as a device to be controlled.

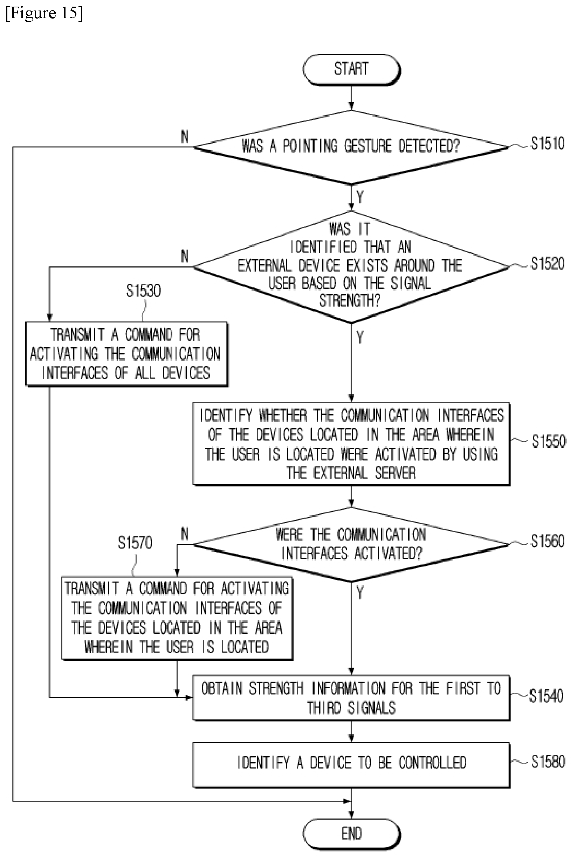

According to one or more embodiments, at the time of initial setting for a mode controlling an external device by using the wearable device 100, the wearable device 100 may obtain a correction value corresponding to the external device. Then, when the external device 300 is identified, the wearable device 100 may correct the threshold value corresponding to the external device 300 based on the obtained correction value. More detailed explanation in this regard will be described with reference to FIG. 15 later.

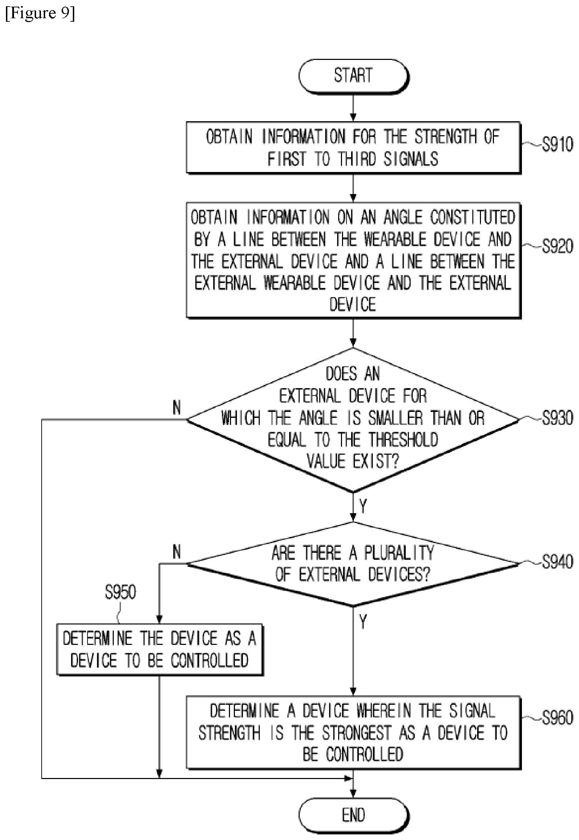

According to one or more embodiments, in case there are a plurality of external devices for which the angle formed between the line between the wearable device 100 and the external device 300 and the line between the external wearable device 200 and the external device 300 is smaller than or equal to the threshold value, the wearable device 100 may compare the strength information of signals received from the plurality of external devices for which the angle is smaller than or equal to the threshold value. Then, the wearable device 100 may identify an external device wherein the strength of the signal is the biggest among the plurality of external devices as a device to be controlled. More detailed explanation in this regard will be described with reference to FIG. 9 later. However, this is merely an example, and the wearable device 100 may identify an external device for which the angle is the smallest among the plurality of external devices as a device to be controlled.

The wearable device 100 may enter the control mode for controlling the device to be controlled in the operation S440. Here, the control mode may be a mode for controlling the device to be controlled according to a user gesture detected through the wearable device 100 or the external wearable device 200. The control mode may be configured to interpret user gestures, which are detected via the wearable device 100 or the external wearable device 200.ss Here, the control mode may be referred to as various terms such as a gesture control mode, a motion control mode, an external device control mode, etc. However, the feature of controlling a device to be controlled according to a gesture of the user during the control mode is merely an example, and a device to be controlled may be controlled by another input method (e.g., a user voice, etc.).

The wearable device 100 may display information on the identified device to be controlled in the operation S450. Specifically, the wearable device 100 may display information on the device to be controlled based on identification information received from the external device 300. For example, the wearable device 100 may display not only identification information such as the type, the product name, the nickname, etc. of the device to be controlled, but also information on the current state (e.g., the operation mode, the volume, the channel, etc.) of the device to be controlled. According to one or more embodiments, the wearable device 100 may display together guide information guiding that the current mode is the control mode for controlling the device to be controlled.

The wearable device 100 may identify whether a predefined hand gesture was input in the operation S460. Here, the predefined hand gesture is a gesture for controlling the external device 300 by using a hand, and information on the hand gesture may be stored in advance. For example, the predefined hand gesture may be various gestures such as a gesture of swiping a hand in up, down, left, and right directions, a gesture of tapping a hand, a gesture of rotating a finger, a gesture of flicking a finger, a gesture of knocking while clenching a fist, a gesture of rotating a hand while clenching a fist, etc.

According to one or more embodiments, the wearable device 100 may identify whether the predefined hand gesture was input based on a sensing value obtained through the sensor included in the wearable device 100. Also, the wearable device 100 may identify whether the predefined hand gesture was input by receiving a sensing value obtained through the sensor included in the external wearable device 200.

According to one or more embodiments, the wearable device 100 may map the predefined hand gesture and a control command, and store them. Here, the predefined gesture may be mapped to different functions according to the type of the external device 300. For example, in case the type of the external device 300 is a TV, a gesture of directing a finger upward while pointing the external device 300 may be a control command for changing the channel upward. Also, in case the type of the external device 300 is an air conditioner, a gesture of directing a finger upward while pointing the external device 300 may be a control command for heightening the set temperature.

If it is identified that the predefined hand gesture was input in the operation S460-Y, the wearable device 100 may transmit a control command corresponding to the predefined hand gesture in the operation S470. That is, the wearable device 100 may identify a control command corresponding to the predefined hand gesture by using the mapping information stored in the memory, and transmit the identified control command to the external device 300 which is the device to be controlled.

Then, the wearable device 100 may identify whether a gesture for ending the control mode was input in the operation S480. Here, the gesture for ending the control mode is a predefined gesture, and it may be, for example, a gesture of clenching a hand twice and then unclenching the hand, but is not limited thereto.

If it is identified that the predefined hand gesture was not input in the operation S460-N, the wearable device 100 may identify whether pointing was changed to another external device in the operation S490. Here, the wearable device 100 may identify whether a motion bigger than or equal to a predetermined size of a hand or a finger was detected, and the direction pointed at by the hand or the finger was changed, and may thereby identify whether pointing was changed to another external device.

According to one or more embodiments, the wearable device 100 may identify whether pointing was changed to another external device based on a sensing value obtained through the sensor included in the wearable device 100. Also, the wearable device 100 may identify whether pointing was changed to another external device by receiving a sensing value obtained through the sensor included in the external wearable device 200.

In case it was identified that pointing was changed to another external device in the operation S490-Y, the wearable device 100 may perform the operations S420 to S460 again, and identify the another external device and control the device.

If it was identified that pointing was not changed to another external device in the operation S490-N, the wearable device 100 may identify whether a gesture for ending the control mode was input in the operation S480.

Hereinafter, the disclosure will be described in more detail with reference to the drawings.

FIG. 5 is a sequence diagram for illustrating a method for a wearable device to detect a pointing gesture according to one or more embodiments of the disclosure.

First, the wearable device 100 may obtain a first sensing value from the sensor 120 in the operation S510. Here, the sensor 120 is a sensor for detecting a gesture of the user, and according to one or more embodiments, it may be a motion sensor such as an acceleration sensor, a gyro sensor, etc., but is not limited thereto.

The external wearable device 200 may obtain a second sensing value from the sensor 120 in the operation S520. The external wearable device 200 may also use the sensor for detecting a gesture of the user.

The external wearable device 200 may transmit the second sensing value to the wearable device 100 in the operation S530. Here, the external wearable device 200 may transmit a signal including time stamp information, a sensing value obtained by the acceleration sensor, a sensing value obtained by the gyro sensor, and information obtained by the PPG sensor. For example, the external wearable device 200 may transmit a signal including information as follows to the wearable device 100.
timestamp: 142351232,
acc_xyz: (0.12, 0.53, 0.05),
gyro_xyz: (0.62, 0.02, 0.06)
ppg: 1.2

The wearable device 100 may detect a pointing gesture based on the first and second sensing values in the operation S540. Here, the pointing gesture may be a gesture by which the user wearing the wearable device 100 points one of the devices in the home.

In particular, the wearable device 100 may detect a pointing gesture based on a window t. That is, the wearable device 100 may extract some sections of the obtained first and second sensing values, and analyze signals in the extracted sections and thereby detect a pointing gesture.

FIG. 6 is a diagram for illustrating a method of identifying an external device pointed at by a wearable device according to one or more embodiments of the disclosure.

As explained in the operation S430 earlier, the wearable device 100 may identify whether the external device 300 is a device to be controlled based on whether the angle formed between the line between the wearable device 100 and the external device 300 and the line between the external wearable device 200 and the external device 300 is smaller than or equal to the threshold value.

Specifically, as illustrated in FIG. 6, the wearable device 100, the external wearable device 200, and the external device 300 may constitute a triangle. Here, the line segments of the triangle may include a line S1 between the wearable device 100 and the external device 300, a line S2 between the wearable device 100 and the external wearable device 200, and a line S3 between the external wearable device 200 and the external device 300.

In particular, the wearable device 100 may obtain a ratio of the lengths of S1 to S3 based on the strength information of the first to third signals. Here, the first signal may be a signal that was transmitted (or broadcasted) by the external device 300 and received by the wearable device 100, and the second signal may be a signal that was transmitted by the external wearable device 200 and received by the wearable device 100, and the third signal may be a signal that was transmitted by the external device 300 and received by the external wearable device 200.

The wearable device 100 may calculate an angle θ formed between S1 and S3 by the following formula 1 based on the lengths (or the ratio of the lengths) of S1 to S3. Formula 1: $θ = {cos}^{- 1} \left(\frac{S {1}^{2} + S {3}^{2} - S {2}^{2}}{2 ⋅ S 1 ⋅ S 3}\right)$

Accordingly, in case the angle θ formed between S1 and S3 is smaller than or equal to the threshold value, the wearable device 100 may identify that the external device 300 is pointed, and identify the external device 300 as a device to be controlled. Here, the threshold value is an angle by which it can be regarded that a wrist of the user, a finger of the user, and the external device 300 are located on a straight line, and it may be, for example, smaller than one degree.

The threshold value may be set as one value regardless of the external device, but this is merely an example, and the threshold value may be set differently according to the size of the user's hand or the type of the external device.

Specifically, the size of a hand of a user may vary according to a user wearing the wearable device 100 and the external wearable device 200. For example, the size of a hand of an adult may be bigger than that of a child, and the size of a hand of a male may be bigger than that of a female. As illustrated in FIG. 7, in case the size of the hand of the first user 710 is smaller than the size of the hand of the second user 720, there may be a difference in the length of S2. In particular, as S2 is a very short side compared to S1 and S3, an error may occur in case the size of the hand is not reflected.

For solving such a problem, the wearable device 100 may correct the threshold value according to the size of the user's hand obtained based on the user's profile information.

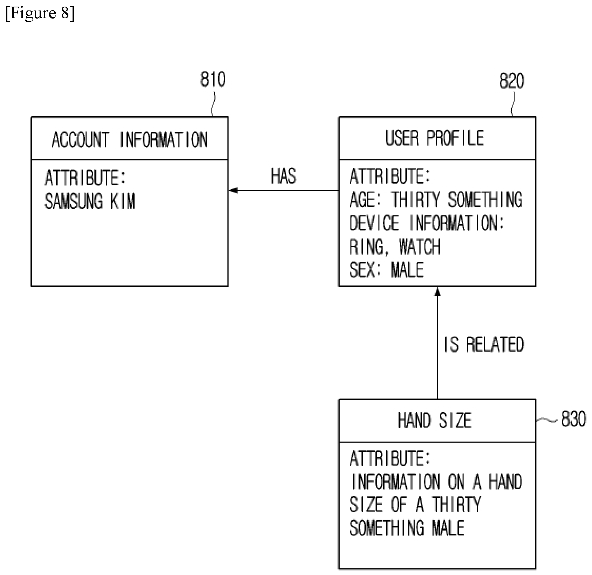

According to one or more embodiments, as illustrated in FIG. 8, the wearable device 100 may obtain "Samsung Kim" as account information 810. Then, the wearable device 100 may obtain user profile information 820 corresponding to the obtained account information 810. Here, the user profile information 820 may include information that the age is thirty something, information that the device is a ring or a watch, and information that the sex is male. Then, the wearable device 100 may obtain information on the hand size 830 corresponding to the user based on the user profile information 820. Here, the information on the hand size corresponding to the user may be obtained by using a knowledge graph of hand sizes of the external server, but this is merely an example, and the information may be obtained through various methods.

Then, the wearable device 100 may correct the threshold value according to the size of the user's hand. Specifically, if the user is recognized as a user having a big hand size (e.g., an adult male, etc.), the wearable device 100 may correct the threshold value to the first value, and if the user is recognized as a user having a small hand size (e.g., a child or a female, etc.), the wearable device 100 may correct the threshold value to the second value smaller than the first value.

In the aforementioned embodiment, it was explained that the threshold value is corrected according to the information on the hand size, but this is merely an example, and the wearable device 100 may correct the length of S2 (or the strength of the second signal) according to the information on the hand size. That is, if the user is recognized as a user having a big hand size, the wearable device 100 may correct the length of S2 (or the strength of the second signal) to be increased, and if the user is recognized as a user having a small hand size, the wearable device 100 may correct the length of S2 (or the strength of the second signal) to be decreased.

In the aforementioned embodiment, it was explained that the threshold value is corrected according to the information on the hand size, but this is merely an example, and for the line S2 between the wearable device 100 and the external wearable device 200, a predetermined value may be brought according to the hand size. That is, when the information on the hand size is obtained, the wearable device 100 may identify S2 based on the obtained information on the hand size, and identify the line S1 between the wearable device 100 and the external device 300 and the line S3 between the external wearable device 200 and the external device 300 based on the strength information of the first to third signals. Then, the wearable device 100 may obtain information on the angle formed between the line S1 between the wearable device 100 and the external device 300 and the line S3 between the external wearable device 200 and the external device 300 based on S1 to S3.

In case a plurality of external devices exist in an area pointed at by the user, the wearable device 100 may identify one external device among the plurality of external devices as a device to be controlled based on the first to third signals.

FIG. 9 is a flow chart for illustrating a method of identifying an external device pointed at by a user among a plurality of external devices according to one or more embodiments of the disclosure.

First, the wearable device 100 may obtain information for the strength of first to third signals in the operation S910. Here, the first signal is a signal that was transmitted (or broadcasted) by the external device 300 and received by the wearable device 100, and the second signal is a signal that was transmitted by the external wearable device 200 and received by the wearable device 100, and the third signal is a signal that was transmitted (or broadcasted) by the external device 300 and received by the external wearable device 200.

In case a plurality of external devices exist, the wearable device 100 may obtain strength information for the first signals corresponding to each of the plurality of external devices, and obtain strength information for the second signals corresponding to each of the plurality of external devices from the external wearable device 200.

The wearable device 100 may obtain information on an angle formed between a line between the wearable device 100 and the external device 300 and a line between the external wearable device 200 and the external device 300 in the operation S920. The wearable device 100 may obtain information on angles corresponding to each of the plurality of external devices.

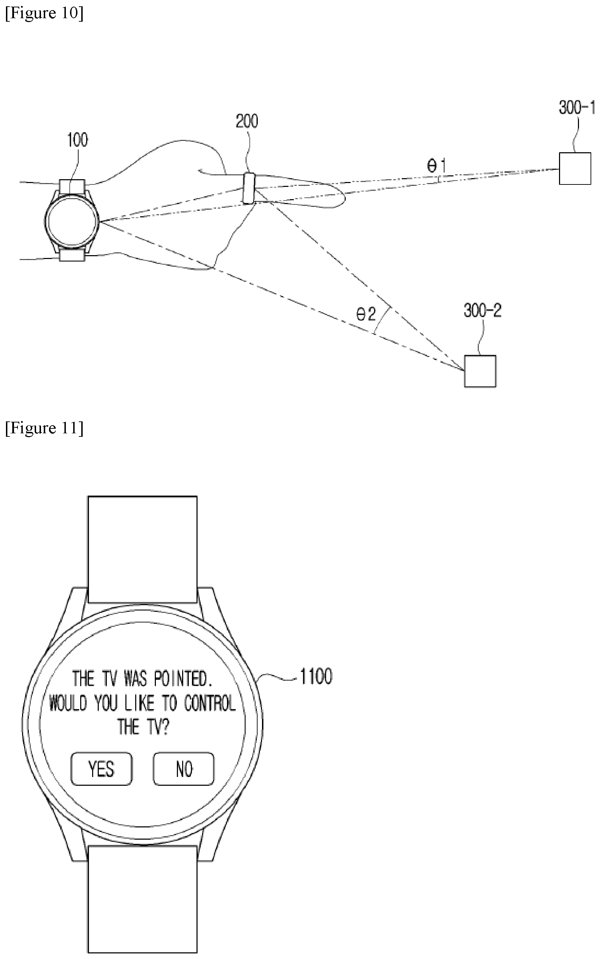

According to one or more embodiments, as illustrated in FIG. 10, the wearable device 100 may obtain information on a first angle θ1 formed between a line between the wearable device 100 and a first external device 300-1 and a line between the external wearable device 200 and the first external device 300-1, and information on a second angle θ2 formed between a line between the wearable device 100 and a second external device 300-2 and a line between the external wearable device 200 and the second external device 300-2 by a method as explained in FIG. 6.

Then, the wearable device 100 may identify whether an external device for which the angle is smaller than or equal to the threshold value exists in the operation S930. That is, the wearable device 100 may identify whether an external device for which the angle is smaller than or equal to the threshold value exists by identifying whether the first angle θ1 and the second angle θ2 are smaller than or equal to the threshold value.

If it is identified that an external device for which the angle is smaller than or equal to the threshold value exists in the operation S930-Y, the wearable device 100 may identify whether there are a plurality of external devices corresponding to the angle smaller than or equal to the threshold value in the operation S940. According to one or more embodiments, the wearable device 100 may identify whether both of the first angle θ1 and the second angle θ2 are smaller than the threshold value.

If it is identified that there are not a plurality of external devices corresponding to the angle smaller than or equal to the threshold value (i.e., if it is identified that there is one external device corresponding to an angle smaller than or equal to the threshold value) in the operation S940-N, the wearable device 100 may determine the one external device as a device to be controlled in the operation S950. For example, if only the first angle between the first angle θ1 and the second angle θ2 is identified to be smaller than or equal to the threshold value, the wearable device 100 may determine the first external device 300-1 corresponding to the first angle as a device to be controlled.

If it is identified that there are a plurality of external devices corresponding to the angle smaller than or equal to the threshold value in the operation S940-Y, the wearable device 100 may determine a device wherein the signal strength is the biggest among the plurality of external devices as a device to be controlled in the operation S960. For example, if both of the first angle θ1 and the second angle θ2 are identified to be smaller than or equal to the threshold value, the wearable device 100 may compare the strength of a signal received from the first external device 300-1 and the strength of a signal received from the second external device 300-2, and determine the first external device 300-1 wherein the signal strength is the biggest as a device to be controlled.

In the aforementioned embodiment, it was explained that the wearable device 100 determines an external device wherein the strength of the signal is the biggest among the plurality of external devices as a device to be controlled. However, this is merely an example, and the wearable device 100 may determine an external device corresponding to the smallest angle as a device to be controlled. For example, if it is identified that both of the first angle θ1 and the second angle θ2 are identified to be smaller than or equal to the threshold value, but the first angle θ1 is smaller than the second angle θ2, the wearable device 100 may determine the first external device 300-1 corresponding to the first angle θ1 as a device to be controlled.

When a device to be controlled is determined, the wearable device 100 may provide guide information for guiding the determined device to be controlled. Here, the guide information may include information on the external device determined as the device to be controlled and an inquiry message inquiring about whether to control the external device. As an example, as illustrated in FIG. 11, the wearable device 100 may provide guide information 1100 including an inquiry message inquiring about whether to control a TV together with information on the TV which is an external device determined as the device to be controlled.

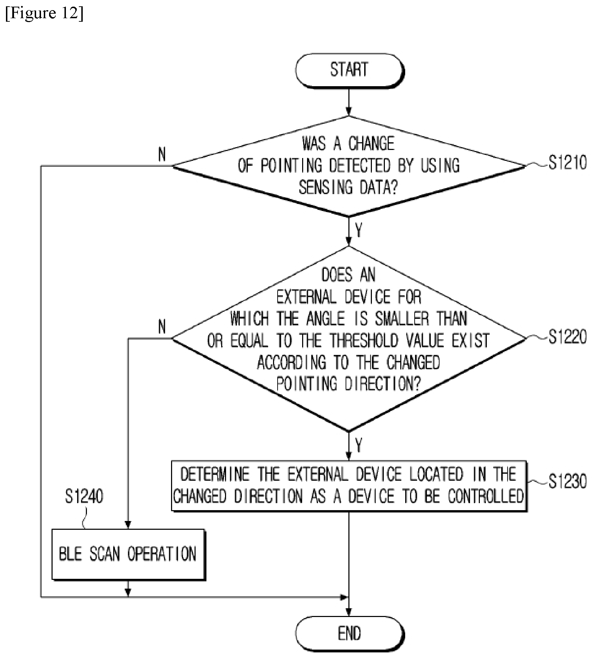

FIG. 12 is a flow chart for illustrating a method of changing a device to be controlled according to a change of a pointing direction of a user according to one or more embodiments of the disclosure.

First, the wearable device 100 may identify whether a change of pointing was detected by using sensing data in the operation S1210. Here, the sensing data may be obtained through the sensor 120 of the wearable device 100, but this is merely an example, and the sensing data may be obtained through the sensor of the external wearable device 200 and received from the external wearable device 200. Here, the sensing data may have been obtained by a motion sensor for detecting a gesture of the user, but is not limited thereto, and it may be data obtained from another sensor (e.g., an image sensor, etc.).

In particular, the wearable device 100 may identify whether there was a change in the detected gesture of the user by using the sensing data. That is, the wearable device 100 may identify whether a change of pointing was detected by identifying whether a gesture of the hand or the finger of the user is a predetermined gesture. For example, the wearable device 100 may identify whether a change of pointing was detected by identifying whether the hand or the finger moved in a left-to-right direction or an up-to-down direction while the finger wearing the external wearable device 200 was unfolded.

The wearable device 100 may identify whether an external device 300 for which the angle is smaller than or equal to the threshold value exists according to the changed pointing direction in the operation S1220. That is, as explained in FIG. 6 earlier, the wearable device 100 may identify whether an external device for which the angle is smaller than or equal to the threshold value exists based on a signal received from an external device located in the changed pointing direction.

If it is identified that the external device 300 for which the angle is smaller than or equal to the threshold value exists in the operation S1220-Y, the wearable device 100 may determine the external device located in the changed direction as a device to be controlled in the operation S1230.

If it is identified that the external device 300 for which the angle is smaller than or equal to the threshold value does not exist in the operation S1220-N, the wearable device 100 may perform a BLE (Bluetooth Low Energy) scan operation in the operation S1240. That is, the wearable device 100 may perform an operation of scanning another external device.

Even if the user wearing the wearable device 100 points the external device 300, in case the communication interface of the external device 300 is not activated, the operation of the disclosure cannot be performed. Accordingly, the wearable device 100 may identify whether communication interfaces of external devices in the home were activated, and activate the communication interfaces of the external devices in the home.

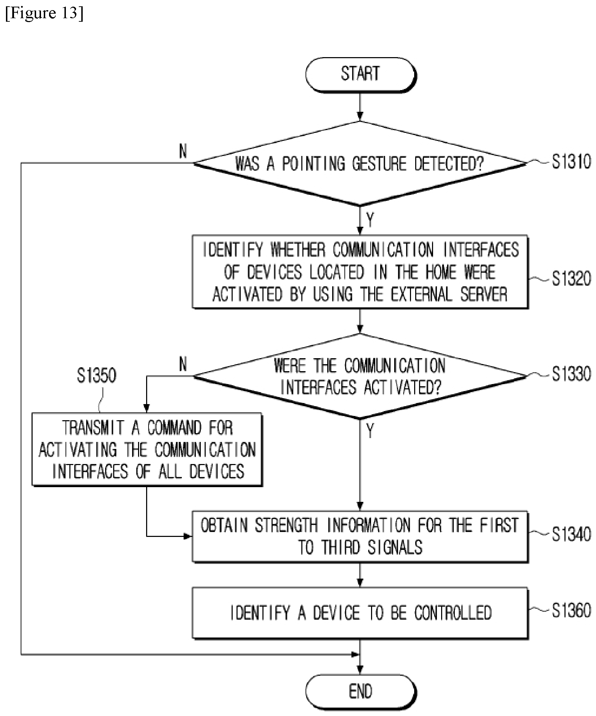

FIG. 13 is a flow chart for illustrating a method of activating a communication interface of an external device according to one or more embodiments of the disclosure.

First, the wearable device 100 may detect a pointing gesture in the operation S1310. As explained earlier, the wearable device 100 may detect a pointing gesture based on a sensing value obtained through the sensor 120 or a sensing value received from the external wearable device 200.

When the pointing gesture is detected in the operation S1310-Y, the wearable device 100 may identify whether communication interfaces of devices located in the home were activated by using the external server in the operation S1320. Here, the external server is a server for managing and controlling the wearable device 100 and various devices in the home, and may be referred to as various terms such as a smart home server, a home IoT server, a cloud server, etc. Here, the external server may receive state information (e.g., power information, communication state information, operation information, etc.) of the various devices in the home by a predetermined period, and store the information.

Specifically, the wearable device 100 may request information on external devices located in the home to the external server. Here, the information on the external devices may include identification information of the external devices, state information of the external devices, etc. The wearable device 100 may identify whether the communication interfaces of the external devices were activated based on the state information of the external devices located in the home from the external server.

If it is identified that the communication interfaces of the external devices were activated in the operation S1330-Y, the wearable device 100 may obtain strength information for the first to third signals corresponding to the external devices wherein the communication interfaces were activated in the operation S1340.

Then, the wearable device 100 may identify a device to be controlled based on the strength information for the first to third signals in the operation S1360.

If it is identified that the communication interfaces of the external devices were not activated in the operation S1330-N, the wearable device 100 may transmit a command for activating the communication interfaces of all devices in the operation S1350. Here, the wearable device 100 may transmit a command for activating the communication interfaces of the external devices through the external server, but this is merely an example, and the wearable device 100 may directly transmit a command for activating the communication interfaces of the external devices through some activated communication interfaces.

After the communication interfaces of the external devices are activated, the wearable device 100 may identify a device to be controlled based on the strength information for the first to third signals in the operation S1360.

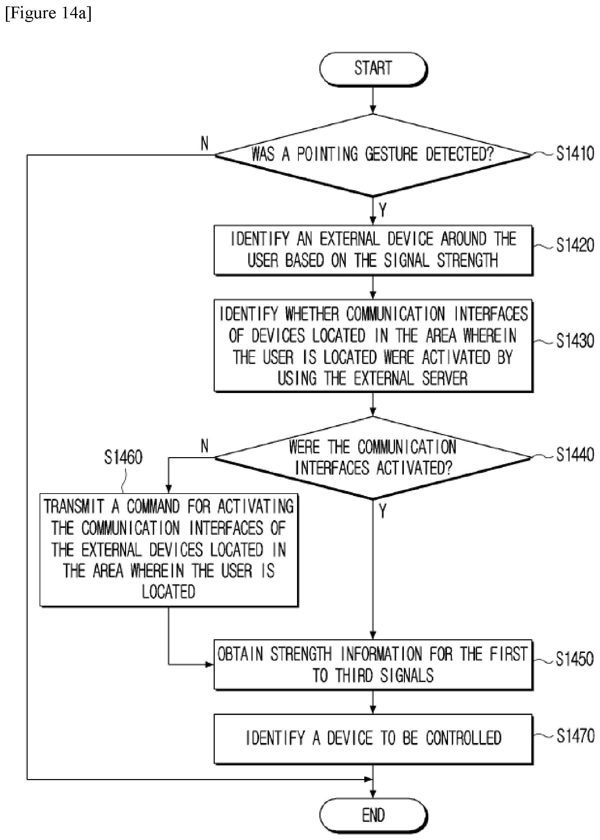

FIG. 14A is a diagram for illustrating a method of activating a communication interface of an external device according to another embodiment of the disclosure.

The wearable device 100 may detect a pointing gesture in the operation S1410. As explained earlier, the wearable device 100 may detect a pointing gesture based on a sensing value obtained through the sensor 120 or a sensing value received from the external wearable device 200.

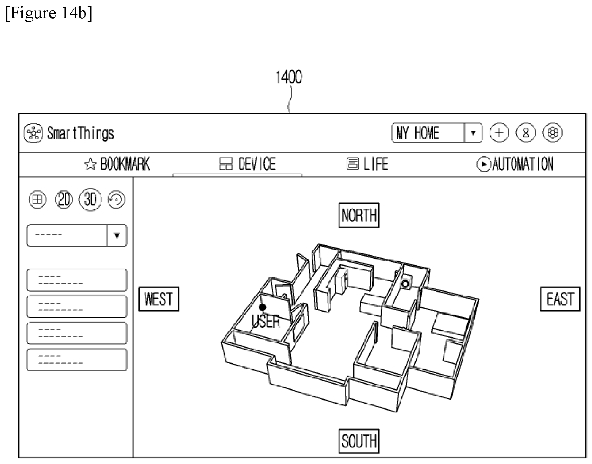

When the pointing gesture is detected in the operation S1410-Y, the wearable device 100 may identify an external device around the user based on the signal strength in the operation S1420. Specifically, the wearable device 100 may identify an external device around the user based on the strength of a signal received from an external device existing in the area wherein the user is located in the home. As illustrated in FIG. 14B, the wearable device 100 may identify the area wherein the identified external device is located by using a pre-stored map 1400. Then, the wearable device 100 may identify the area wherein the identified external device is located as the area wherein the user is located. For example, in case the signal received by the wearable device 100 was received from the first external device, the wearable device 100 may identify that the first external device is located in the master bedroom based on the map 1400, and identify that the location of the user is the master bedroom. When signals are received from a plurality of external devices, the wearable device 100 may identify an area wherein an external device having the biggest signal strength is located as the area wherein the user is located.

The wearable device 100 may identify whether communication interfaces of devices located in the area wherein the user is located were activated by using the external server in the operation S1430.

Specifically, the wearable device 100 may request information on the external devices located in the area wherein the user is located to the external server. Here, the information on the external devices may include identification information of the external devices, state information of the external devices, etc. The wearable device 100 may identify whether the communication interfaces of the external devices were activated based on the state information of the external devices located in the area wherein the user is located received from the external server.

If it is identified that the communication interfaces of the external devices located in the area wherein the user is located were activated in the operation S1440-Y, the wearable device 100 may obtain strength information for the first to third signals corresponding to the external devices wherein the communication interfaces were activated in the operation S1450. Then, the wearable device 100 may identify a device to be controlled based on the strength information for the first to third signals in the operation S1470.

If it is identified that the communication interfaces of the external devices located in the area wherein the user is located were not activated in the operation S1440-N, the wearable device 100 may transmit a command for activating the communication interfaces of the external devices located in the area wherein the user is located in the operation S1460. After the communication interfaces of the external devices are activated, the wearable device 100 may identify a device to be controlled based on the strength information for the first to third signals in the operation S1470.

FIG. 15 is a diagram for illustrating a method of activating a communication interface of an external device according to another embodiment of the disclosure.

The wearable device 100 may detect a pointing gesture in the operation S1510.

When the pointing gesture is detected in the operation S1510-Y, the wearable device 100 may identify whether an external device exists around the user based on the signal strength in the operation S1520.

If it is identified that an external device does not exist around the user in the operation S1520-N, the wearable device 100 may transmit a command for activating the communication interfaces of all devices in the operation S1530. Then, the wearable device 100 may obtain strength information for the first to third signals corresponding to the external devices wherein the communication interfaces were activated in the operation S1540. Then, the wearable device 100 may identify a device to be controlled based on the strength information for the first to third signals in the operation S1580.

If it is identified that an external device exists around the user in the operation S1520-Y, the wearable device 100 may identify whether the communication interfaces of the devices located in the area wherein the user is located were activated by using the external server in the operation S1550.

If it is identified that the communication interfaces of the external devices located in the area wherein the user is located were activated in the operation S1560-Y, the wearable device 100 may obtain strength information for the first to third signals corresponding to the external devices wherein the communication interfaces were activated in the operation S1540. Then, the wearable device 100 may identify a device to be controlled based on the strength information for the first to third signals in the operation S1580.

If it is identified that the communication interfaces of the external devices located in the area wherein the user is located were not activated in the operation S1560-N, the wearable device 100 may transmit a command for activating the communication interfaces of the devices located in the area wherein the user is located in the operation S1570. After the communication interfaces of the external devices are activated, the wearable device 100 may obtain strength information for the first to third signals in the operation S1540, and identify a device to be controlled in the operation S1580.

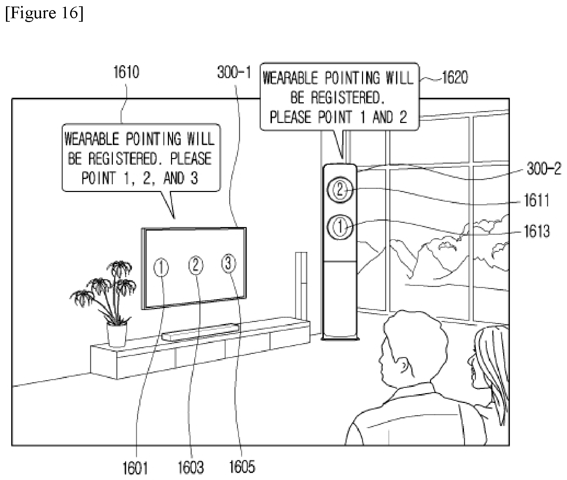

FIG. 16 is a diagram for illustrating initial setting for a mode controlling an external device by using a wearable device according to one or more embodiments of the disclosure.

At the time of initial setting for a control mode controlling the external device by using the wearable device 100, a correction value of a threshold value may be obtained.

Specifically, as illustrated in FIG. 16, at the time of initial setting for a control mode controlling the external device, the first external device 300-1 may provide guide information requesting to point a plurality of areas 1601, 1603, 1605 of the first external device 300-1. Here, the guide information may include a guide indicator on the plurality of areas 1601, 1603, 1605 of the display, and include a voice message 1610 which is "Wearable pointing will be registered. Please point 1, 2 and 3."

When the wearable device 100 points the plurality of areas 1601, 1603, 1605, the wearable device 100 may store information on angles that were obtained on time points of pointing each of the plurality of areas 1601, 1603, 1605. Then, the wearable device 100 may obtain a correction value for a threshold value corresponding to the first external device 300-1 based on the information on the obtained angles.

Also, at the time of initial setting for the control mode controlling the external device, the second external device 300-2 may provide guide information requesting to point a plurality of areas 1611, 1613 of the second external device 300-2. Here, the guide information may include a guide indicator on the plurality of areas 1611, 1613 of the display, and include a voice message 1620 which is "Wearable pointing will be registered. Please point 1 and 2."

When the wearable device 100 points the plurality of areas 1611, 1613, the wearable device 100 may store information on angles that were obtained on time points of pointing each of the plurality of areas 1611, 1613. Then, the wearable device 100 may obtain a correction value for a threshold value corresponding to the second external device 300-2 based on the information on the obtained angles.

The correction value for the threshold value obtained by a method as explained in FIG. 7 may be used for identifying whether an external device is a device to be controlled.

In case the external device 300 was identified as a device to be controlled, the wearable device 100 may enter a control mode for controlling the external device 300. Here, the external device 300 may be a TV, an air conditioner, an air purifier, a humidifier, a speaker, a microwave oven, a switch/a dimmer, a lighting on the ceiling, a lighting, a dehumidifier, etc., but is not limited thereto. Also, when entering the control mode, the wearable device 100 may control the temperature, the sound, the brightness, etc. of the external device 300.

According to one or more embodiments, even for the same gesture, control commands for controlling different functions may be obtained depending on an external device. According to one or more embodiments, in case the external device 300 is an air conditioner, the wearable device 100 may change the setting of the temperature of the external device 300 according to a user gesture. According to another embodiment, in case the external device 300 is a blind curtain, the wearable device 100 may change the setting of the height of the external device 300 according to a user gesture.

According to one or more embodiments, in case the external device 300 is a smart lamp, if a gesture of double tapping while pointing the smart lamp is input, the wearable device 100 may transmit a control command for turning on or off the power of the smart lamp to the smart lamp.

According to one or more embodiments, in case the external device 300 is an air conditioner, if a gesture of clenching the fist twice while pointing the air conditioner is input, the wearable device 100 may transmit a control command for turning on or off the power of the air conditioner to the air conditioner.

According to one or more embodiments, in case the external device 300 is a smart lamp, if a gesture of tapping while pointing the smart lamp and then rotating is input, the wearable device 100 may transmit a control command for lightening or darkening the brightness of the smart lamp to the smart lamp. For example, if a gesture of rotating in a first direction (a counter-clockwise direction) is input, the wearable device 100 may transmit a control command for lightening the brightness of the smart lamp to the smart lamp. If a gesture of rotating in a second direction (a clockwise direction) is input, the wearable device 100 may transmit a control command for darkening the brightness of the smart lamp to the smart lamp.

According to one or more embodiments, in case the external device 300 is a blind, if a gesture of clenching the fist while pointing the blind and then rotating is input, the wearable device 100 may transmit a control command for raising or lowering the blind to the blind. For example, if a gesture of clenching the fist and then rotating in the first direction (a counter-clockwise direction) is input, the wearable device 100 may transmit a control command for raising the blind to the blind. If a gesture of clenching the fist and then rotating in the second direction (a clockwise direction) is input, the wearable device 100 may transmit a control command for lowering the blind to the blind.

According to one or more embodiments, in case the external device 300 is a TV, if a gesture of double tapping while pointing the TV is input, the wearable device 100 may transmit a control command for turning on or off the power of the TV to the TV. Also, if a gesture of tapping while pointing the TV and then rotating in the first direction (a counter-clockwise direction) is input, the wearable device 100 may transmit a control command for increasing the volume of the TV to the TV, and if a gesture of tapping while pointing the TV and then rotating in the second direction (a clockwise direction) is input, the wearable device 100 may transmit a control command for decreasing the volume of the TV to the TV. In addition, if a gesture of tapping while pointing the TV and then raising the hand upward is input, the wearable device 100 may transmit a control command to the TV for changing the channel of the TV upward, and if a gesture of tapping while pointing the TV and then lowering the hand downward is input, the wearable device 100 may transmit a control command to the TV for changing the channel of the TV downward.

However, the control commands corresponding to gestures as described above are merely an example, and control commands corresponding to other gestures can be obtained.

In the aforementioned embodiment, it was explained that the wearable device 100 identifies whether the external device 300 is a device to be controlled. However, this is merely an example, and a separate user terminal (e.g., a smartphone, etc.) may identify whether the external device 300 is a device to be controlled. According to one or more embodiments, a user terminal may obtain strength information for the first to third signals from the wearable device 100 or the external wearable device 200. Then, the user terminal may obtain information on an angle formed between a line between the wearable device 100 and the external device 300 and a line between the external wearable device 200 and the external device 300 based on the strength information for the first to third signals. Also, the user terminal may identify whether the external device 300 is a device to be controlled based on whether the angle is within the threshold value. Further, the user terminal can perform the operations of the wearable device 100 explained in FIG. 1 to FIG. 16.

The method according to the one or more embodiments of the disclosure may be provided while being included in a computer program product. A computer program product refers to a product, and it can be traded between a seller and a buyer. A computer program product can be distributed in the form of a storage medium that is readable by machines (e.g., compact disc read only memory (CD-ROM)), or may be distributed on-line (e.g., download or upload) through an application store (e.g., Play Store^{TM}), or directly between two user devices (e.g., smartphones). In the case of on-line distribution, at least a portion of a computer program product (e.g., a downloadable app) may be stored in a storage medium such as the server of the manufacturer, the server of the application store, and the memory of the relay server at least temporarily, or may be generated temporarily.

Also, the method according to the one or more embodiments of the disclosure may be implemented as software including instructions stored in machine-readable storage media, which can be read by machines (e.g., computers). The machines refer to devices that call instructions stored in a storage medium, and can operate according to the called instructions, and the devices may include an electronic device according to the aforementioned embodiments (e.g., a TV).

A storage medium readable by machines may be provided in the form of a non-transitory storage medium. Here, the term "a non-transitory storage medium" only means that a storage medium is tangible, and does not include signals (e.g., electromagnetic waves), and the term does not distinguish a case wherein data is stored in the storage medium semipermanently and a case wherein data is stored temporarily. For example, "a non-transitory storage medium" may include a buffer wherein data is temporarily stored.

In case an instruction is executed by a processor, the processor may perform a function corresponding to the instruction by itself, or by using other components under its control. An instruction may include a code that is generated or executed by a compiler or an interpreter.

Also, while certain embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. A wearable device comprising:
a communication interface;
memory storing instructions; and
at least one processor configured to individually or collectively execute the instructions,
wherein the instructions, when individually or collectively executed by the at least one processor, cause the wearable device to:
obtain strength information regarding a strength of a first signal transmitted by an external device,
obtain strength information regarding a strength of a second signal transmitted by an external wearable device,
receive, from the external wearable device through the communication interface, strength information regarding a strength of a third signal received by the external wearable device,
obtain, based on the strength information for the first signal, the second signal, and the third signal, information on an angle formed between a line between the wearable device and the external device and a line between the external wearable device and the external device, and
identify whether the external device is a device to be controlled based on whether the angle is less than or equal to a threshold value.

2. The wearable device of claim 1, wherein the instructions, when individually or collectively executed by the at least one processor, further cause the wearable device to:
obtain information on a hand gesture of a user wearing the wearable device based on a sensing value detected by a motion sensor, wherein the motion sensor is included in at least one of the wearable device or the external wearable device, and
transmit, to the external device through the communication interface, a control command corresponding to the information on the hand gesture.

3. The wearable device of claim 1, wherein the instructions, when individually or collectively executed by the at least one processor, further cause the wearable device to:
obtain profile information of a user comprising information on a size of a user's hand, and
correct the threshold value based on a correction value corresponding to the size of the user's hand.

4. The wearable device of claim 1, wherein the instructions, when individually or collectively executed by the at least one processor, further cause the wearable device to:
based on initially setting a mode controlling the external device using the wearable device, obtain a correction value corresponding to the external device, and
based on identifying the external device, correct the threshold value based on the obtained correction value.

5. The wearable device of claim 1, wherein the instructions, when individually or collectively executed by the at least one processor, further cause the wearable device to:
identify whether an external communication interface of at least one device, among a plurality of devices existing in a home, was activated using an external server, and
based on identifying that the external communication interface of at least one device, of the plurality of devices existing in the home, was not activated, transmit a request signal, to the external server through the communication interface, to activate the external communication interface of the at least one device of the plurality of devices existing in the home.

6. The wearable device of claim 5, wherein the instructions, when executed individually or collectively by the at least one processor, further cause the wearable device to:
based on information on ambient devices included in a signal received through the communication interface, obtain information on an area where a user wearing the wearable device is located, and
transmit, to the external server through the communication interface, a request signal to activate the external communication interface of at least one of the at least one device, of the plurality of devices existing in the home, that is located in the area.

7. The wearable device of claim 1, wherein the instructions, when individually or collectively executed by the at least one processor, further cause the wearable device to:
receive, from the external wearable device through the communication interface, a sensing value detected by a motion sensor of the external wearable device, and
detect a pointing gesture of a user based on the received sensing value.

8. The wearable device of claim 1, wherein the instructions, when individually or collectively executed by the at least one processor, further cause the wearable device to:
obtain strength information regarding a strength of respective first signals transmitted by each external device of a plurality of external devices, wherein the plurality of external devices includes the external device,
obtain, based on the strength information for the respective first signals, the second signal, and the third signal, information on respective angles formed between a line between the wearable device and each of the plurality of external devices and the line between the external wearable device and the external device, and
based on identifying that on the respective angles are all less than or equal to the threshold value, identify an external device, among the plurality of external devices, associated with a largest signal strength as the device to be controlled.

9. The wearable device of claim 1, wherein the instructions, when individually or collectively executed by the at least one processor, further cause the wearable device to:
provide guide information comprising information on the external device and information on a mode for controlling the external device.

10. The wearable device of claim 1,
wherein the wearable device comprises a device worn on a wrist of a user, and
wherein the external wearable device comprises a device worn on a finger of the user.

11. A method of controlling a wearable device, the method comprising:
obtaining strength information regarding a strength of a first signal transmitted by an external device;
obtaining strength information regarding a strength of a second signal transmitted by an external wearable device;
receiving, from the external wearable device through a communication interface of the wearable device, strength information for the strength of a third signal received by the external wearable device;
obtaining, based on the strength information for the first signal, the second signal, and the third signal, information on an angle formed between a line between the wearable device and the external device and a line between the external wearable device and the external device; and
identifying whether the external device is a device to be controlled based on whether the angle is less than or equal to a threshold value.

12. The method of claim 11, further comprising:
obtaining information on a hand gesture of a user wearing the wearable device based on a sensing value detected by a motion sensor, wherein the motion sensor is included in at least one of the wearable device or the external wearable device; and
transmitting, to the external device through the communication interface, a control command corresponding to the information on the hand gesture.

13. The method of claim 11, further comprising:
obtaining profile information of a user comprising information on a size of a user's hand; and
correcting the threshold value based on a correction value corresponding to the size of the user's hand.

14. The method of claim 11, further comprising:
based on initially setting a mode controlling the external device using the wearable device, obtaining a correction value corresponding to the external device; and
based on identifying the external device, correcting the threshold value based on the obtained correction value.

15. The method of claim 11, further comprising:
identifying whether an external communication interface of at least one device, among a plurality of devices existing in a home, was activated using an external server, and
based on identifying that the external communication interface of at least one device, of the plurality of devices existing in the home, was not activated, transmitting a request signal, to the external server through the communication interface, to activate the external communication interface of the at least one device of the plurality of devices existing in the home.
